# EUROPÄISCHE PATENTSCHRIFT

(11) **EP 2 490 393 B1**
(45) Veröffentlichungstag und Bekanntmachung des Hinweises auf die Patenterteilung: **17.07.2013**
(21) Anmeldenummer: 11001323.2
(22) Anmeldetag: 17.02.2011
(51) Int. Cl.: H04L 29/06, H04L 12/26, H04L 29/08

(54) **Verfahren und Vorrichtung zur Analyse von Datenpaketen**
Method and device for analysing data packets
Procédé et dispositif destinés à l'analyse de paquets de données

(43) Veröffentlichungstag der Anmeldung: 22.08.2012
(73) Patentinhaber: Desoma GmbH, 83022 Rosenheim (DE)
(72) Erfinder: Knott, Christoph, 83558 Maitenbeth (DE)
(74) Vertreter: Wörz, Volker Alfred

(56) Entgegenhaltungen:
- US-A1- 2005 055 399
- US-A1- 2008 120 721
- US-A1- 2010 195 538

## Beschreibung

Die Erfindung betrifft ein Verfahren zur Analyse von Datenpaketen in paketbasierten Kommunikationsnetzen, welche Metadaten und Nutzdaten umfassen und vorzugsweise in einem Datenstrom als Teil einer Netzwerksitzung übermittelt werden.

Eine Analyse von Datenpaketen eines Datenstroms wird in vielen Bereichen durchgeführt, beispielsweise um die Daten bezüglich deren Inhalte zu filtern oder zu kategorisieren. Insbesondere bei der Überwachung von Datenströmen ist eine Analyse des Inhalts der einzelnen Datenpakete und der Netzwerksitzungen notwendig. Bei bekannten Verfahren werden Kopien der über eine Datenleitung übermittelten Datenpakete erstellt und entweder für eine spätere Verarbeitung abgespeichert oder die Datenpakete werden in Echtzeit analysiert.

Das Abspeichern sämtlicher Datenpakete eines Datenstroms benötigt jedoch sehr große und leistungsfähige Datenspeicher. Für die nachfolgende Analyse der abgespeicherten Daten wird außerdem eine hohe Prozessorleistung benötigt. Für eine dauerhafte Überwachung sind derartige Systeme jedoch meist ungeeignet, da über einen längeren Zeitraum betrachtet meist eine derart große Datenmenge in dem Datenspeicher abgespeichert wird, dass eine zeitgerechte Analyse dieser Daten nicht mehr sichergestellt werden kann. Ein Überlaufen des Speichers kann ebenfalls auftreten..

Echtzeitfähige Analysesysteme sehen eine sofortige Analyse der über die Datenleitung übertragenen Daten vor und sind grundsätzlich für eine dauerhafte Überwachung eines Datenverkehrs geeignet, jedoch ist es mittels dieser Systeme meist nicht möglich, den gesamten Inhalt einer Netzwerksitzung zu rekonstruieren, da die einzelnen Datenpakete häufig doppelt oder in nicht chronologischer Reihenfolge über das Netzwerk übermittelt werden. Dies tritt vor allem in last-verteilten und redundanten Netzen auf. Derartige echtzeitfähige Analysesysteme können deshalb keine vollständig sichere Überwachung gewährleisten, da beispielsweise Schlüsselwörter, nach deren gemeinsamen Vorkommen in einer Nachricht oder einer Netzwerksitzung gesucht wird, auf verschiedene Datenpakete verteilt sein können, so dass diese Schlüsselwörter dann nicht auffindbar sind.

Die Publikation US 2008/0120721 offenbart eine Vorrichtung zur Analyse von über eine Kommunikationsverbindung übertragenen Datenpaketen, bei der die zu analysierenden Datenpakete aus dem Datenstrom extrahiert und in Metadaten und Nutzdaten getrennt werden und den Paketen eine Signatur zugeordnet wird. Zur Detecktierung von Netzangriffen wird in den extrahierten Paketen nach definierten Mustern ("commonly used strings") gesucht, wobei im Bedarfsall auch ganze Netzwerksitzungen rekonstriert reconstruiert ("reassembled") werden.

Aufgabe der vorliegenden Erfindung ist es, ein Verfahren und eine Vorrichtung zur Analyse von Datenpaketen beziehungsweise des Inhalts der Nutz- und Metadaten von Datenpaketen bereitzustellen, die eine dauerhafte Überwachung des Datenverkehrs und ein sicheres Auffinden der zu überwachenden Inhalte ermöglichen.

Die Aufgabe wird durch ein Verfahren sowie eine Vorrichtung mit den in den unabhängigen Patentansprüchen angegebenen Merkmalen gelöst. Die Merkmale von weiteren Ausführungsformen und vorteilhaften Weiterbildungen sind in den Unteransprüchen angegeben.

Erfindungsgemäß werden zunächst die zu analysierenden Datenpakete aus dem Datenstrom extrahiert. Vorzugsweise wird hierzu eine Kopie jedes dieser Datenpakete erstellt. Es wird dann eine Signatur des jeweils extrahierten Datenpaketes erzeugt. Vorzugsweise wird als Signatur ein mittels einer Hashfunktion bestimmter Hashcode verwendet, wobei identische Datenpakete den gleichen Hashcode aufweisen. Das Datenpaket wird dann in einem Zwischenspeicher abgespeichert, wobei die Metadaten in einen ersten Speicherbereich und die Nutzdaten in einen zweiten Speicherbereich derart abgespeichert werden, dass eine Zuordnung der Nutzdaten zu den Metadaten eines Datenpakets auch innerhalb des Zwischenspeichers erhalten bleibt. Dies kann beispielsweise durch die Verwendung sogenannter Zeiger realisiert werden. Gemäß einer bevorzugten Ausführungsform, bei welcher der erste Speicherbereich und der zweite Speicherbereich des Zwischenspeichers in Segmente aufgeteilt sind, erfolgt die Zuordnung der Nutzdaten zu den jeweiligen Metadaten dadurch, dass die Nutzdaten und die Metadaten eines Datenpakets in jeweils entsprechende Segmente des ersten und des zweiten Speicherbereichs abgelegt werden. Es kann beispielsweise vorgesehen sein, dass die Segmentnummer bezüglich des ersten Speicherbereiches, in welchem die Metadaten abgespeichert werden, der Segmentnummer des zweiten Speicherbereichs entspricht, in welchem die Nutzdaten dieses Datenpakets abgespeichert werden. Selbstverständlich ist es auch vorstellbar, anhand der Segmentnummern eines Speicherbereichs die Segmentnummern des anderen Speicherbereichs gemäß einer vorgegebenen Rechenvorschrift zu berechnen, um so eine eindeutige Beziehung zwischen den Metadaten und den Nutzdaten herzustellen.

Bei einer Vielzahl von bekannten Speicherelementen, die vorliegend als Grundlage für den erfindungsgemäßen Zwischenspeicher herangezogen werden können, wird für den Vorgang des Speicherns eine sogenannte Transaktionsnummer für den Zugriff auf den Speicher verwendet. Bei einem derartigen Zwischenspeicher bietet es sich an, die Signatur des Datenpakets als Transaktionsnummer zu verwenden. Insbesondere wenn eine Mehrzahl von Verarbeitungseinheiten vorgesehen sind, die eine Extraktion der Datenpakete aus dem Datenstrom vornehmen, wird durch die eindeutige Transaktionsnummer sichergestellt, dass jedes Datenpaket nur einmal in dem Zwischenspeicher abgespeichert wird. Wird nämlich versucht, mit derselben Transaktionsnummer ein Datenpaket ein zweites Mal einzuschreiben, so wird dies beispielsweise durch die Logik des Speicherelements verhindert. Somit wird eine besonders ökonomische Ausnutzung der Speicherkapazität erreicht, da in dem Zwischenspeicher jedes extrahierte Datenpaket nur einmal abgespeichert werden kann. Diese Eigenschaft ermöglicht ferner eine besonders einfach realisierbare Skalierbarkeit der erfindungsgemäßen Vorrichtung, wie weiter unten noch gezeigt werden wird.

Um eine Analyse des Inhalts der extrahierten Datenpakete zu ermöglichen, ist erfindungsgemäß vorgesehen, dass vor oder nach dem Speichern der Metadaten und der Nutzdaten des Datenpakets eine Suche in den Nutzdaten nach mindestens einem Suchbegriff durchgeführt wird. Dazu ist es vorteilhaft, zumindest eine teilweise Rekonstruktion der Netzwerksitzung durchzuführen, um auch über Paketgrenzen hinweg Suchbegriffe anwenden zu können. Hierzu werden die Pakete einer Netzwerksitzung vorzugsweise chronologisch nach deren Eintreffen oder nach Sequenznummern sortiert, die Daten der Schichten 5-7 nach dem sogenannten OSI-Schichtmodell in einen Ringbuffer geschrieben und auf diesem Ringbuffer anschließend die Suche durchgeführt. Beispielsweise kann die Größe des Ringbuffers per Netzwerksitzung 1600 Byte betragen wenn die maximale Paketgröße in einer Netzwerksitzung 1500 Byte beträgt. Die Suche selbst kann insbesondere mittels sogenannter regulärer Ausdrücke definiert werden. Vorzugsweise wird der Erfolg der Suche in den Metadaten beispielsweise dadurch angezeigt, dass bei erfolgreicher Suche eine Kennung, beispielsweise ein sogenanntes Flag, gesetzt wird. Es kann folglich bereits anhand der Metadaten der Datenpakete einer Netzwerksitzung erkannt werden, ob die Nutzdaten den Suchbegriff aufweisen. Da regelmäßig die Metadaten einen geringeren Speicherplatz einnehmen, ist dadurch ein schnellerer Zugriff auf diese Daten innerhalb des Zwischenspeichers möglich. Vorzugsweise werden Nutzdaten auch dann abgespeichert, wenn die Suche in diesen Nutzdaten nicht erfolgreich war. Da der zu findende Suchbegriff in einem anderen Paket der Netzwerksitzung auftreten kann, wird dadurch sichergestellt, dass für die Rekonstruktion der Netzwerksitzung alle Datenpakte vorhanden sind und somit die Netzwerksitzung vollständig rekonstruiert werden kann.

Erfindungsgemäß werden für eine weitergehende Analyse der Daten die Datenpakete einer Netzwerksitzung wieder komplett zusammengesetzt, so dass die ursprüngliche Information, beispielsweise der Inhalt einer E-Mail, ein übermitteltes Dokument oder ein Video wieder vollständig vorliegen. Dazu werden zunächst die Metadaten aus dem Zwischenspeicher mittels eines Rekonstruktionsmoduls ausgelesen. Bei dem Auslesen der Metadaten wird zunächst geprüft, ob innerhalb der Metadaten eine Kennung gesetzt ist, die anzeigt, ob die Metadaten aktuell bearbeitet werden. Ist eine derartige Kennung bereits gesetzt, so wird die Bearbeitung der Metadaten abgebrochen. Andernfalls wird die Bearbeitung fortgesetzt und die Kennung wird gesetzt. Dadurch wird erreicht, dass bei Vorhandensein mehrerer Rekonstruktionsmodule unterschiedliche Netzwerksitzungen von mehreren Rekonstruktionsmodulen in redundanter Verarbeitung erstellt werden. Diese Kennung zeigt also an, ob aktuell ein Rekonstruktionsmodul mit der Rekonstruktion der dieses Datenpaket umfassenden Netzwerksitzung beschäftigt ist und ermöglicht damit wieder eine besonders einfach realisierbare Skalierung des gesamten Systems.

Falls alle Metadaten und Nutzdaten einer Netzwerksitzung gelesen worden sind und in mindestens einem der Nutzdaten die Suche nach dem Suchbegriff erfolgreich war, was beispielsweise anhand der oben beschriebenen, das Ergebnis der Suche anzeigenden Kennung innerhalb der Metadaten erkennbar ist, werden die Nutzdaten in ihre ursprüngliche Reihenfolge gebracht und somit wird die Netzwerksitzung rekonstruiert. Vorzugsweise wird nach dem Lesen des letzten Datenpakets einer Netzwerksitzung in den in dem Zwischenspeicher abgespeicherten und zu dieser Netzwerksitzung gehörenden Metadaten vermerkt, dass diese Netzwerksitzung wiederhergestellt worden ist und/oder die Datenpakete dieser Netzwerksitzung aus dem Zwischenspeicher ausgelesen worden sind. Die diesbezüglichen Speicherplätze stehen somit wieder zur Verfügung und können für das Abspeichern weiterer Datenpakete verwendet werden. Außerdem kann mit diesem Vermerk die Vollständigkeit der Rekonstruktion oder im Gegensatz dazu ein Absturz eines Rekonstruktionsmoduls erkannt werden. Dies kann dadurch erreicht werden, dass bei erfolgter Rekonstruktion der Netzwerksitzung der Vermerk wieder gelöscht wird. Bleibt der Vermerk jedoch länger als eine vorgebbare Zeitdauer gesetzt, so wird auf ein fehlerhaftes Verhalten des Rekonstruktionsmoduls, beispielsweise bedingt durch einen Systemabsturz dieses Rekonstruktionsmoduls geschlossen. Es kann dann vorgesehen sein, dass dieses Rekonstruktionsmodul überprüft wird und/oder dass diese Netzwerksitzung von einem anderen Rekonstruktionsmodul rekonstruiert wird.

Durch das erfindungsgemäße Verfahren und die erfindungsgemäße Vorrichtung wird es ermöglicht, dass die Datenpakete einer Netzwerksitzung nahezu in Echtzeit analysiert werden können und falls erkannt wird, dass innerhalb eines Datenpakets ein bestimmter Suchbegriff auftritt, wird die gesamte Netzwerksitzung für eine Weiterbearbeitung oder ein Abspeichern zur Verfügung gestellt. Ein weiterer Vorteil ist dadurch gegeben, dass eine besonders einfache Skalierbarkeit des gesamten Systems möglich ist. So können sogar während des Betriebs der erfindungsgemäßen Vorrichtung bzw. während des Durchführens des erfindungsgemäßen Verfahrens einzelne Module zugeschaltet oder entfernt werden. Beispielsweise können Extraktionsmodule hinzugenommen oder weggenommen werden, die das Extrahieren der Datenpakete aus dem Datenstrom durchführen. Bei einer geeigneten Speicherverwaltung können ferner Speicherkapazitäten vergrößert oder verringert werden und es können die Rekonstruktion der Netzwerksitzungen durchführende Rekonstruktionsmodule hinzugenommen werden, ohne dass hierfür die Analyse des Datenstroms unterbrochen werden müsste.

Gemäß einer vorteilhaften Weiterbildung der Erfindung wird eine Analyse der Nutzdaten einer Netzwerksitzung durchgeführt, um mindestens einen Dateityp einer innerhalb der Netzwerksitzung übertragenen Datei zu identifizieren. Dies kann beispielsweise durch eine Suche erreicht werden, die sich an den sogenannten MIME-Typ orientiert. Eine so identifizierte Datei kann dann aus der Netzwerksitzung extrahiert werden und für eine weitere Verarbeitung zur Verfügung gestellt werden. Besonders vorteilhaft ist es hierbei, weitere Daten, die eine Identifizierung des Senders oder des Empfängers der Netzwerksitzung ermöglichen, zusammen mit der extrahierten Datei abzuspeichern. Insbesondere kann vorgesehen sein, die in den Nutzdaten vorhandenen Metainformationen der jeweiligen Netzwerksitzung auszuwerten, beispielsweise um Kommunikationsmuster zu erkennen. Dies kann unabhängig von dem verwendeten Kommunikationsprotokoll auf Basis einer heuristischen Analyse erfolgen. Eine derartige Analyse kann beispielsweise Aussagen über das verwendete Betriebssystem des Senders geben und über vorhandene Router oder Firewalls, die möglicherweise bei dem Sender installiert sind.

Besonders vorteilhaft ist es, wenn nach der Rekonstruktion der Netzwerksitzung eine Auswertung der innerhalb der Netzwerksitzung übertragenen Nutzdaten unter Berücksichtigung von Netzwerkprotokollen der Anwendungsschicht (sogenannte Schichten 5 bis 7 des OSI-Schichtmodells) erfolgt.

Gemäß einer bevorzugten Ausführungsform sind der erste Speicherbereich und der zweite Speicherbereich des Zwischenspeichers als Ringpuffer ausgeführt. Dies ermöglicht einerseits einen schnellen Zugriff auf die einzelnen Speichersegmente und stellt eine definierte Wiederverwendbarkeit der einzelnen Segmente zur Verfügung und verhindert gleichzeitig das Auftreten eines Speicherüberlaufs.

Vorzugsweise erfolgt die Zuordnung der in dem Zwischenspeicher abgespeicherten Metadaten zu den abgespeicherten Nutzdaten über eine eindeutige Segmentnummer der jeweiligen Speicherbereiche. Der Zwischenspeicher ist vorteilhafterweise außerdem so ausgeführt, dass ein Abspeichern von Daten nur in Abhängigkeit von dem Ergebnis einer Überprüfung der verwendeten Transaktionsnummer ermöglicht wird. Dadurch wird verhindert, dass Duplikate von Daten in dem Zwischenspeicher abgespeichert werden, beispielsweise weil der Empfänger eines Datenpakets dieses nochmals angefordert hat oder weil mehrere Extraktionsmodule vorhanden sind, die ein und dasselbe Datenpaket gelesen haben und nun in den Zwischenspeicher einschreiben wollen.

Die Erfindung hat gegenüber den herkömmlichen Verfahren und Systemen den Vorteil, dass zumindest nahezu in Echtzeit die Datenpakete einer Netzwerksitzung untersucht werden können und zumindest falls eine Suche erfolgreich ist, die gesamte Netzwerksitzung zur Verfügung gestellt wird.

Die eingangs genannte Aufgabe wird insbesondere auch durch ein Computerprogramm gelöst, das auf einer Vorrichtung zur Analyse des Inhalts von Datenpaketen eines Datenstroms, beispielsweise auf einem Netzwerkknoten, ablauffähig ist und zur Durchführung des erfindungsgemäßen Verfahrens programmiert ist. Dabei stellt das Computerprogramm durch die einzelnen Verfahrensschritte ebenso die Erfindung dar wie das Verfahren selbst.

Weitere vorteilhafte Merkmale der Erfindung können den in den Figuren dargestellten und im Folgenden beschriebenen Ausführungsformen entnommen werden.
- Figur 1: Ein Blockschaltbild einer zur Durchführung des erfindungsgemäßen Verfahrens geeigneten Vorrichtung gemäß einem ersten Ausführungsbeispiel und
- Figur 2: ein Blockschaltbild einer zur Durchführung des erfindungsgemäßen Verfahrens geeigneten Vorrichtung gemäß einem zweiten Ausführungsbeispiel.

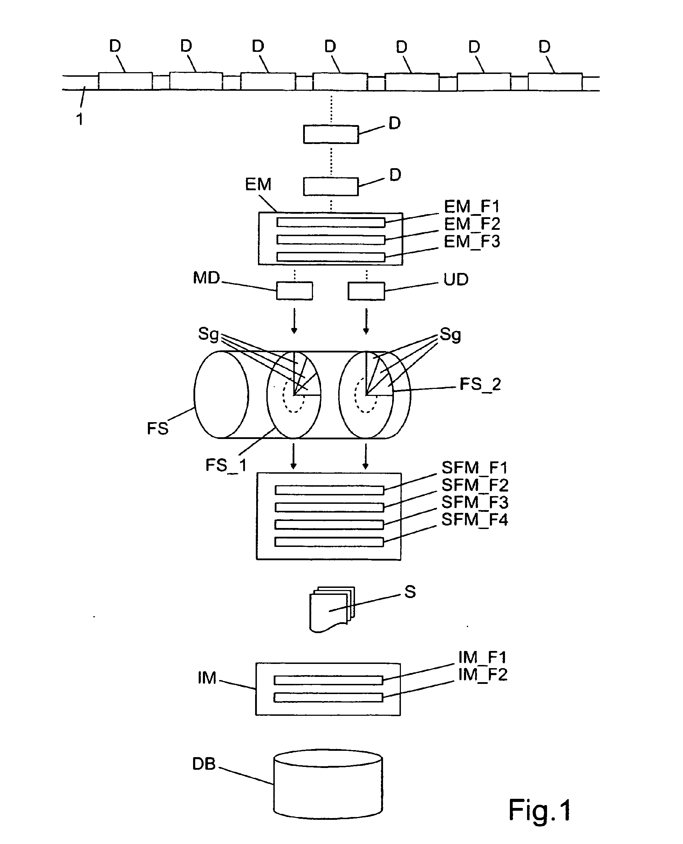

In dem in Figur 1 gezeigten Blockschaltbild sind Datenpakete D dargestellt, die über eine Datenleitung 1 transportiert werden. Die Datenpakete werden beispielsweise gemäß dem Internetprotokoll (IP) über die Datenleitung übertragen. Die in Figur 1 dargestellten Datenpakete D stellen lediglich einen kleinen Ausschnitt eines typischerweise über eine Datenleitung 1 übertragenen Datenverkehrs dar.

Ein Extraktionsmodul EM empfängt aus dem Datenstrom extrahierte Datenpakete. Für eine weitere Verarbeitung der Datenpakete umfasst das Extraktionsmodul EM eine Mehrzahl von Funktionsblöcken EM_F1, EM_F2, EM_F3. In dem ersten Funktionsblock EM_F1 wird eine Signatur des aktuell bearbeiteten Datenpakets erstellt. Hierzu wird beispielsweise mittels einer Hashfunktion ein Hashcode erzeugt und dem Datenpaket zugeordnet. Diese Signatur erlaubt damit eine - abgesehen von den Begrenzungen durch die Hashfunktion - eindeutige Identifizierung des Datenpakets.

In dem zweiten Funktionsblock EM_F2 werden Teile der Netzwerksitzung rekonstruiert und deren Daten nach einer oder mehrerer vorgebbarer Zeichen oder Zeichenfolgen, die im folgenden als Schlüsselworte bezeichnet werden, gesucht. Der Funktionsblock EM_F2 arbeitet hierzu vorzugsweise auf Grundlage sogenannter regulärer Ausdrücke. Die Schlüsselworte, nach denen gesucht werden soll, beziehungsweise die regulären Ausdrücke werden dem Extraktionsmodul EM über eine geeignete Benutzerschnittstelle vorgegeben. Das Ergebnis dieser Suche wird in den Metadaten des Datenpakets abgespeichert. Beispielsweise ist jedem aktuell vorgesehenen Suchbegriff beziehungsweise regulären Ausdruck eine Kennung zugeordnet. Wenn die Suche nach einem Suchbegriff erfolgreich war, wird die diesem Suchbegriff zugeordnete Kennung in den Metadaten abgespeichert. Somit kann im weiteren Verlauf der Analyse bereits anhand der Metadaten eines Datenpakets schnell festgestellt werden, ob in den zugehörigen Nutzdaten bestimmte Zeichenketten vorhanden sind.

In dem dritten Funktionsmodul EM_F3 erfolgt eine Auftrennung der Datenpakete in die jeweiligen Metadaten MD und die Nutzdaten DU, die dann in einem Zwischenspeicher FS, der beispielsweise als Ringpuffer ausgebildet ist, abgespeichert werden. Hierbei werden sämtliche Metadaten der Datenpakete in einem ersten Speicherbereich FS_1 und die Nutzdaten in einem zweiten Speicherbereich FS_2 abgespeichert. Bei dem in Figur 1 dargestellten Ausführungsbeispiel erfolgt das Speichern der Metadaten und der Nutzdaten in sich jeweils entsprechenden Segmenten Sg des ersten Speicherbereichs und des zweiten Speicherbereichs. Ein Segment des ersten Speicherbereichs zur Aufnahme der Metadaten umfasst beispielsweise 32 Byte und ein Segment des zweiten Speicherbereichs zur Aufnahme der Nutzdaten umfasst beispielsweise 64 KByte. Zweckmäßigerweise ist die Größe der Segmente in Abhängigkeit der verwendeten Datenübertragungsprotokolle dimensioniert, so dass für alle zu erwartenden Protokolle ein Abspeichern der Nutzdaten und der Metadaten eines Datenpakets in jeweils einem Segment möglich ist. Mit der oben genannten Dimensionierung können beispielsweise Pakete gemäß dem Protokoll IPV4 abgespeichert werden.

Gemäß einer Ausführungsform der erfindungsgemäßen Vorrichtung umfasst jedes der Speicherbereiche zirka 5 Millionen Segmente, wodurch sich für den Zwischenspeicher eine Kapazität von über 300 GByte ergibt, falls die Segmentgröße wie oben beispielhaft angegeben gewählt wird. Außer von den Datenübertragungsprotokollen hängen die Größe der Segmente und die Anzahl der Segmente noch von weiteren Faktoren ab, beispielsweise der Anzahl der Extraktionsmodule innerhalb eines möglicherweise zu überwachenden Netzwerks.

Für das Speichern der Metadaten und der Nutzdaten in dem Zwischenspeicher wird vorzugsweise eine Transaktionsnummer verwendet, die der von dem Extraktionsmodul EM erzeugten Signatur des Datenpaketes entspricht oder zumindest aus der Signatur gebildet ist. Beispielsweise wird für das Speichern der Metadaten die Signatur unverändert als Transaktionsnummer verwendet und für das Speichern der Nutzdaten wird der Wert der Signatur um den Wert 1 erhöht.

In Figur 1 ist ferner ein Sitzungs-Wiederherstellungsmodul SFM gezeigt, welches ebenfalls eine Mehrzahl von Funktionsblöcken umfasst. In einem ersten Funktionsblock FSM_F1 werden die Metadaten aus dem Zwischenspeicher ausgelesen. Hierbei werden diese Metadaten nur ausgelesen, wenn sie zu einer aktuell bearbeiteten Netzwerksitzung gehören. Dies kann anhand einer in den Metadaten vorhandenen Kennung erkannt werden.

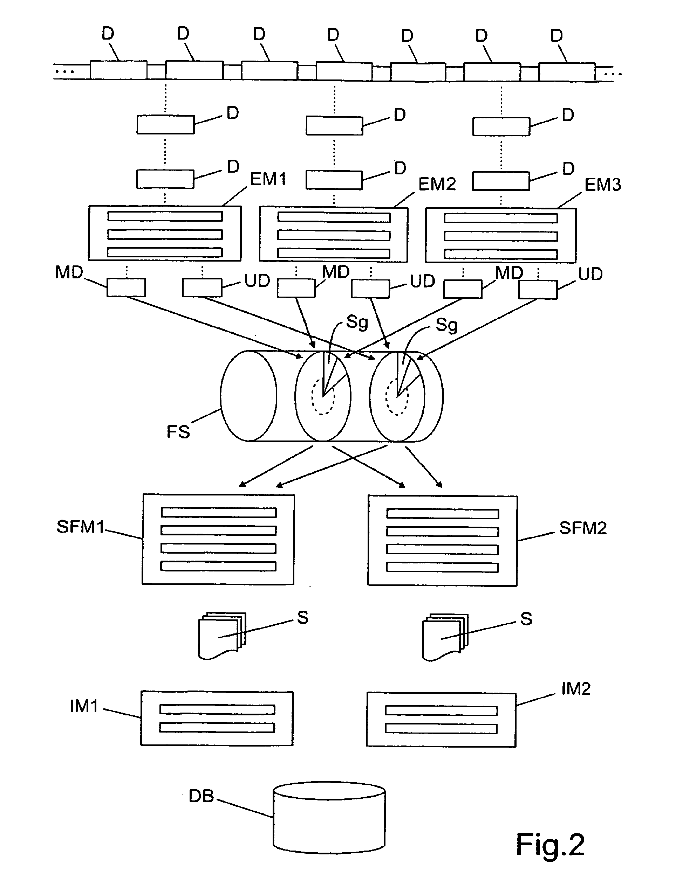

In einem zweiten Funktionsblock SFM_F2 wird gemäß einer vorteilhaften Ausführungsform geprüft, ob in den Metadaten eine Kennung gesetzt ist, die anzeigt, ob dieses Datum aktuell bearbeitet wird. Dies ist insbesondere dann von Vorteil, wenn - wie in der nachfolgenden Figur 2 gezeigt wird - eine Mehrzahl von Sitzungs-Wiederherstellungsmodulen vorhanden ist. In diesem Fall kann dann festgestellt werden, ob dieses Datenpaket bereits von einem anderen Sitzungs-Wiederherstellungsmodul bearbeitet wird. Ist dies der Fall, so würde das Sitzungs-Wiederherstellungsmodul, das dieses Datenpaket aktuell ausgelesen hat, erkennen, dass diese Netzwerksitzung bereits von einem anderen Sitzungs-Wiederherstellungsmodul bearbeitet wird und würde deshalb aus dem Zwischenspeicher ein anderes Datenpaket beziehungsweise eine andere Netzwerksitzung zur Bearbeitung auswählen. Ist diese Kennung jedoch nicht gesetzt, so würde das Sitzungs-Wiederherstellungsmodul die entsprechende Kennung setzen und anzeigen, dass dieses Datenpaket beziehungsweise diese Netzwerksitzung nun von diesem Modul bearbeitet wird.

In einem Funktionsblock SFM_F3 erfolgt eine Analyse der ausgelesenen Metadaten. Hier kann beispielsweise festgestellt werden, ob in den Metadaten die eine erfolgreiche Suche anzeigende Kennung gesetzt ist. Wenn sämtliche Metadaten einer Netzwerksitzung ausgelesen sind und in keinem der Metadaten die Kennung gesetzt ist, kann vorgesehen sein, die Verarbeitung hier abzubrechen, da davon ausgegangen werden kann, dass eine weitere Analyse nicht zweckdienlich ist. Ist jedoch in mindestens einem der Metadaten die Kennung gesetzt, so wird in einem Funktionsblock SFM_F4 die Netzwerksitzung wiederhergestellt. Hierzu werden die Nutzdaten beispielsweise anhand von deren Sequenznummern wieder in die ursprüngliche Reihenfolge gebracht. Falls die Nutzdaten bisher aus dem Zwischenspeicher noch nicht ausgelesen worden sind, so erfolgt dies nun. Die Nutzdaten werden dann sortiert und es wird dadurch der ursprüngliche Inhalt der Netzwerksitzung wiederhergestellt. In der Regel wird dieser vollständig sein, jedoch falls einzelne Pakete verloren gegangen sind, kann selbstverständlich auch die Netzwerksitzung nicht vollständig wiederhergestellt werden.

Die so beispielsweise mehrere Dokumente und/oder Mediendaten wie beispielsweise Videodaten und Musikdaten oder sonstige Daten eines Datentyps umfassende Netzwerksitzung wird dann einem Identifikationsmodul IM übergeben, in welchem eine Analyse der nun als Netzwerksitzung vorliegenden Daten erfolgt. Auch das Identifikationsmodul kann eine Mehrzahl von Funktionsblöcken umfassen. Beispielsweise wird in einem ersten Funktionsblock IM_F1 eine Identifikation beziehungsweise Dekodierung und Speicherung aller relevanten Informationen der Anwendungsschicht, also beispielsweise der Informationen gemäß OSI Level 5 bis Level 7, durchgeführt. Vorzugsweise erfolgt hier eine Decodierung beziehungsweise Identifikation in einer Mehrzahl von Schichten. Beispielsweise wird in einer ersten Schicht eine MIME-basierte Datenextraktion durchgeführt. Dies erfolgt auf Grundlage von Datentypen (z.B. PDF, JPEG, GIF, RTP, ...). Diese Extraktion ist zunächst unabhängig vom verwendeten Datenübertragungsprotokoll.

In einem weiteren Schritt kann eine heuristische Datenextraktion erfolgen. Hierbei erfolgt eine Auswertung von Metadaten der Netzwerksitzung (nicht zu verwechseln mit den Metadaten des Datenpakets), um Kommunikationsmuster zu erkennen. Auch dies erfolgt unabhängig vom dem verwendeten Datenübertragungsprotokoll. In einem weiteren Schritt kann eine protokollbasierte Auswertung der Netzwerksitzungsdaten erfolgen. Dies kann beispielsweise gemäß der RFC-Standards erfolgen.

In einem weiteren Funktionsmodul IM_F2 kann vorgesehen sein, fehlerhafte oder abgebrochene Netzwerksitzungen ergänzend oder gesondert auszuwerten.

Die in dem Sitzungs-Wiederherstellungsmodul SFM und dem Identifikationsmodul IM erzeugten Daten werden - zumindest teilweise - in einem weiteren Datenspeicher DB abgespeichert, der beispielsweise in Form eines sogenannten Data Warehouses auf Basis einer Dokumenten-orientierten Datenbank erstellt ist. Vorzugsweise ermöglicht der Datenspeicher DB eine effiziente Volltext-Indizierung auf Basis von sogenannten B*-Bäumen. Weitere Ausführungsformen können eine semistrukturierte Datenspeicherung und eine Versionierung beziehungsweise einen Änderungsnachweis aller Datenbestände vorsehen.

Bevorzugte Ausführungsformen der Datenbank DB weisen eine Mehrzahl von Schnittstellen für einen Zugriff auf die Datenbank auf. Diese umfassen beispielsweise JSON (Java Script Object Notation) für Anbindungen an sogenannte Application Server. Weitere Schnittstellen können textbasiert sein oder direkt an die Datenbank gestellt werden, die hierzu vorteilhafterweise eine definierte Programmierschnittstelle aufweist. Die Datenbank DB kann ferner eine Anbindung zu weiteren Auswertungsmodulen aufweisen, die eine erweiterte Auswertung der Daten beispielsweise auf Grundlage eines unter den Begriff Data Mining zu subsumierenden Verfahrens, durchführen.

In Figur 2 ist eine weitere mögliche Ausführungsform der Erfindung gezeigt, anhand derer insbesondere die Vorteile bezüglich der Skalierbarkeit der Erfindung deutlich werden. Die in Figur 2 gezeigte Ausführungsform umfasst eine Mehrzahl von Extraktionsmodulen EM1, EM2, EM3, eine Mehrzahl von Sitzungs-Wiederherstellungsmodulen SFM1, SFM2 und eine Mehrzahl von Identifikationsmodulen IM1, IM2. Die in Figur 2 dargestellen Module sind lediglich exemplarisch zu verstehen. Selbstverständlich kann von jedem der Module eine beliebige Anzahl vorgesehen sein. Wie eingangs bereits beschrieben, ermöglicht es die Erfindung, auch während des Betriebs einer erfindungsgemäßen Vorrichtung beziehungsweise während des Durchführens des erfindungsgemäßen Verfahrens beispielsweise einzelne Module hinzuzufügen, ohne dass weitere Änderungen notwendig wären. Dies wird u.a. durch die Verwendung der vorzugsweise mittels einer Hashfunktion berechneten Signaturen der Datenpakete und der Verwendung dieser Signaturen als Transaktionsnummer für den Vorgang des Abspeicherns der Datenpakete in den Zwischenspeicher FS erreicht. Bei dem in Figur 2 dargestellten Ausführungsbeispiel ist es möglich, dass einzelne der Extraktionsmodule EM1, EM2, EM3 dasselbe Datenpaket aus dem Datenstrom extrahieren. Bei der Berechnung der Signatur verwenden alle Extraktionsmodule dieselbe Hashfunktion und erzeugen damit dieselbe Signatur. Versucht nun ein Extraktionsmodul ein Datenpaket beziehungsweise die Metadaten und die Nutzdaten eines Datenpakets in den Zwischenspeicher abzuspeichern, so wird der Zwischenspeicher dies nur ermöglichen, falls die Transaktionsnummer innerhalb eines definierten Zeitfensters noch nicht verwendet worden ist. Dies ist aber genau dann der Fall, wenn dieses Datenpaket bereits von einem anderen Extraktionsmodul in den Zwischenspeicher eingeschrieben worden ist. Durch die Mehrzahl von Extraktionsmodulen wird sichergestellt, dass tatsächlich jedes der Datenpakete bearbeitet werden kann. Insbesondere ist es möglich, Extraktionsmodule von geringerer Leistungsfähigkeit einzusetzen, da ein Datenpaket, das aufgrund einer geringen Verarbeitungsgeschwindigkeit eines Extraktionsmoduls nicht extrahiert wird von dem oder einem der danach folgenden Extraktionsmodule bearbeitet wird. Stellt sich also während des Betriebs der erfindungsgemäßen Vorrichtung heraus, dass der Datenverkehr sich erhöht hat und deshalb eine Anpassung der Leistung des Systems notwendig ist, kann dies einfach durch Hinzufügen eines weiteren Extraktionsmoduls oder von einer Mehrzahl von Extraktionsmodulen erfolgen.

Ebenso einfach ist eine Skalierbarkeit bezüglich der Sitzungs-Wiederherstellungsmodule möglich. Dies wird durch den eingangs bereits beschriebenen Mechanismus erreicht, bei welchem das Sitzungs-Wiederherstellungsmodul beim Auslesen von Metadaten aus dem Zwischenspeicher zunächst prüft, ob dort eine Kennung gesetzt ist, die anzeigt, dass die Netzwerksitzung, welcher dieses Datenpaket angehört, bereits von einem anderen Sitzungs-Wiederherstellungsmodul bearbeitet wird. Alternativ und/oder ergänzend hierzu kann in den Metadaten selbst eine Kennung abgespeichert werden, die anzeigt, dass das jeweilige Datenpaket von einem Sitzungs-Wiederherstellungsmodul bearbeitet wird. Findet ein Sitzungs-Wiederherstellungsmodul diesen Zustand vor, so wird es eine andere Netzwerksitzung wählen und damit beginnen, die zugehörigen Datenpakete aus dem Zwischenspeicher auszulesen. Hat ein Sitzungs-Wiederherstellungsmodul sämtliche Datenpakete einer Netzwerksitzung ausgelesen, so wird dies ebenfalls durch eine entsprechende Kennung im Zwischenspeicher oder durch entsprechende Kennungen in den Metadaten dieser Netzwerksitzung angezeigt. Dies verhindert, dass ein und dieselbe Netzwerksitzung von mehreren Sitzungs-Wiederherstellungsmodulen quasi parallel oder auch nacheinander bearbeitet wird. Es stellt außerdem sicher, dass jede Netzwerksitzung nur einmal wiederhergestellt wird.

Eine vorteilhafte Weiterbildung sieht vor, dass die Kennung, die anzeigt, dass eine Netzwerksitzung beziehungsweise ein Metadatum einer Netzwerksitzung aktuell bearbeitet wird nach einer vorbestimmten Zeit automatisch seine Gültigkeit verliert. Damit wird erreicht, dass ein Sitzungs-Wiederherstellungsmodul nicht das Wiederherstellen einer Netzwerksitzung blockieren kann, falls es beispielsweise abgestürzt ist oder aus dem System entnommen worden ist. Dies stellt sicher, dass auch während des Betriebs der erfindungsgemäßen Vorrichtung ein Sitzungs-Wiederherstellungsmodul entnommen werden kann, ohne dass dies den Betrieb des Gesamtsystems nachteilig behindert.

Die Anzahl der einzelnen Verarbeitungsmodule richtet sich einerseits nach deren Verfügbarkeit und andererseits nach der Menge der zu analysierenden Datenpakete und nach der Leistungsfähigkeit jedes einzelnen Moduls. Insbesondere ist es mit dem erfindungsgemäßen Verfahren möglich, beispielsweise einzelne Extraktionsmodule unterschiedlicher Leistung in einem einzigen System ohne weitere Vorkehrungen zusammenzuschalten.

Die Erfindung ermöglicht ferner ein aktives Eingreifen in den Datenverkehr. Wird beispielsweise festgestellt, dass in einer Netzwerksitzung unerwünschte Daten übertragen werden oder dass von einem bestimmten Sender häufig unerwünschte Daten übertragen werden, so kann das Extraktionsmodul derart ausgestaltet werden, dass die Daten nicht bei der Extraktion aus dem Netz sofort kopiert werden, sondern dass diese Datenpakete tatsächlich entnommen werden und erst nach der Analyse wieder eingespeist werden. Gemäß einer anderen Ausführungsform ist vorgesehen, dass bei Erkennen von unerlaubten Inhalten innerhalb einer Netzwerksitzung diese abgebrochen wird oder die Übertragung von Daten eines Senders vollständig unterbunden wird.

Der Zwischenspeicher kann auf Grundlage einer Vielzahl verschiedener Speichersysteme realisiert sein, wie beispielsweise NAS, SAN, lokale Festplatten, einer RAM-Disk, oder weiterer bekannter Speichersysteme. Das System ist auch unabhängig von dem verwendeten Kommunikationsprotokoll. Hier können beispielsweise NFS, CIFS, FCP, SSP, SATA, und so weiter verwendet werden.

Für eine Datenübertragung auf Grundlage des Internetprotokolls kann das Sitzungs-Wiederherstellungsmodul auf Grundlage eines hierfür optimierten TCP-Stacks für eine passive Datenanalyse realisiert werden. Das Sitzungs-Wiederherstellungsmodul kann derart konfiguriert sein, dass eine Extraktion und Speicherung aller Informationen auf den Schichten L2 bis L4 des OSI, also beispielsweise IP, TCP, UDP, erfolgt und einer heuristischen Analyse zugeführt wird. Diese Analyse ist unabhängig von der Analyse von Informationen der Anwendungsschicht (L5 bis L7 des OSI).

Die vorgeschlagene Erfindung kann insbesondere unter Verwendung offener Standards, offener Schnittstellen und offener Architekturen realisiert werden und besonders einfach in bestehende Systeme durch die klar definierten Schnittstellen integriert werden. Bezüglich der Sicherheit hat das erfindungsgemäße System den Vorteil, dass es problemlos derart realisierbar ist, dass die Verfügbarkeit des Gesamtsystems nicht von der Verfügbarkeit eines einzelnen Moduls abhängt. Es gibt mithin in diesem System keinen sogenannten Single-Point-Off-Failure. Ein weiterer Vorteil der Skalierbarkeit ist auch, dass während des Betriebs des Systems einzelne Module aktualisiert werden können, ohne dass dies den Gesamtbetrieb beeinträchtigt.

Je nach Bedarf kann innerhalb des Identifikationsmoduls eine Vielzahl unterschiedlicher Analyseverfahren durchgeführt werden. Neben der bereits erwähnten MIME-basierten Analyse, mit welcher nahezu alle bekannten Dateitypen erkannt werden können, kann selbstverständlich vorgesehen sein, in einem komprimierten Format übertragene Daten zu extrahieren. Besonders vorteilhaft ist es, wenn eine Identifikation von HTML-basierten Daten die Möglichkeit umfasst, statische Inhalte, die also innerhalb einer Netzwerksitzung nicht explizit wiedergegeben werden, automatisch beispielsweise aus dem Internet nachzuladen, um damit selbständig die Netzwerksitzung zu vervollständigen.

Die heuristische Analyse kann die Informationen des Datenpakets betreffen und hierbei beispielsweise einen Detektor zum Erkennen von Manipulationen an TCP Prüfsummen umfassen, eine Betriebssystemerkennung und eine Auswertung von Netzen, in denen Router oder Firewalls verwendet werden. Eine heuristische Auswertung der Nutzdaten kann URLs miteinbeziehen, E-Mail Adressen, diverse Anmeldeinformationen und Benutzernamen, SSL/TLS Erkennung, Skype Erkennung und/oder DNS Abfragen. Die heuristische Analyse kann selbstverständlich an die Art der Netzwerksitzung angepasst sein und je nach erkannter Netzwerksitzungsart weitere Analyseverfahren einsetzen. Beispielsweise kann die Art eines Chats erkannt werden. Auch hieraus lassen sich weitere Informationen folgern. Insbesondere kann festgestellt werden, ob mit nicht zulässigen Protokollen oder mit nicht zulässigen Servern eine Kommunikation stattfindet.

Die in den Figuren 1 und 2 gezeigten Ausführungsbeispiele sind lediglich beispielhaft zu verstehen und dienen der Erläuterung der Erfindung. Andere Ausführungsformen, die ebenfalls die Erfindung darstellen, können diese auf eine andere Art realisieren. Beispielsweise sind die einzelnen Funktionsblöcke innerhalb der Module nur exemplarisch zu verstehen. Jedes Modul kann weitere Funktionsblöcke umfassen oder nur einen Teil der in den Figuren 1 und 2 gezeigten Funktionsblöcke aufweisen. Ferner kann vorgesehen sein, dass die Funktionsblöcke nicht explizit als solche realisiert sind, sondern das jeweilige Modul lediglich eine oder mehrere der entsprechenden Funktionalitäten aufweist. Auch die in den Figuren 1 und 2 gezeigte Aufteilung der Gesamtfunktionalität dient in erster Linie der Veranschaulichung. Selbstverständlich kann ebenso vorgesehen sein, die Module noch weiter zu unterteilen oder die Funktionalitäten von mehreren Modulen zumindest teilweise in anderen Modulen zu integrieren.

## Patentansprüche

1. Verfahren zur Analyse eines Metadaten (MD) und Nutzdaten DU) umfassenden Datenpakets (D) in einem Datenstrom, wobei das Datenpaket (D) aus dem Datenstrom extrahiert wird, dem Datenpaket (D) eine eindeutige Signatur zugeordnet wird; das Datenpaket (D) in einen Zwischenspeicher (FS) abgespeichert wird, wobei die Metadaten (MD) in einen ersten Speicherbereich (FS_1) und die Nutzdaten (UD) in einen zweiten Speicherbereich (FS_2) derart abgespeichert werden, dass eine Zuordnung der Nutzdaten (UD) zu den jeweiligen Metadaten (MD) erhalten bleibt, **dadurch gekennzeichnet, dass** eine für die Ausführung des jeweiligen Speichervorgangs verwendete Transaktionsnummer in Abhängigkeit von der Signatur des Datenpakets (D) gebildet wird; vor oder nach dem Speichern des Datenpakets (D) eine Suche in den Nutzdaten (UD) nach mindestens einem Suchbegriff durchgeführt wird und zumindest eine erfolgreiche Suche in den Metadaten (MD) durch Setzen einer Such-Kennung vermerkt wird; die Metadaten (MD) aus dem Zwischenspeicher (FS) gelesen werden und falls eine Prüfung ergibt, dass dieses Datenpaket aktuell nicht bearbeitet wird, die zugehörigen Nutzdaten (UD) aus dem Zwischenspeicher (FS) ausgelesen werden und in den in dem Zwischenspeicher (FS) abgespeicherten Metadaten (MD) eine Kennung gesetzt wird, die anzeigt, dass dieses Datenpaket (D) nun bearbeitet wird; falls alle Metadaten (MD) und Nutzdaten (UD) einer Netzwerksitzung gelesen worden sind und in mindestens einem der Nutzdaten (UD) die Suche nach dem Suchbegriff erfolgreich war, die Netzwerksitzung dadurch rekonstruiert wird, dass die Nutzdaten (UD) in ihre ursprüngliche Reihenfolge gebracht werden.

2. Verfahren nach Anspruch 1, **dadurch gekennzeichnet, dass** nach dem Lesen des letzten Datenpakets (D) einer Netzwerksitzung in den in dem Zwischenspeicher (FS) abgespeicherten zu dieser Netzwerksitzung gehörigen Metadaten (MD) vermerkt wird, dass diese Metadaten bearbeitet sind.

3. Verfahren nach einem der Ansprüche 1 oder 2, **dadurch gekennzeichnet, dass** eine Analyse der Nutzdaten (UD) einer rekonstruierten Netzwerksitzung durchgeführt wird, um mindestens einen Dateityp mindestens einer innerhalb der Netzwerksitzung übertragenen Datei zu identifizieren.

4. Verfahren nach einem der vorangehenden Ansprüche, **dadurch gekennzeichnet, dass** Metainformationen in den Nutzdaten (UD) der Netzwerksitzung ausgewertet werden.

5. Verfahren nach einem der vorangehenden Ansprüche, **dadurch gekennzeichnet, dass** eine Auswertung der innerhalb der Netzwerksitzung übertragenen Nutzdaten (UD) unter Berücksichtigung von Netzwerkprotokollen der Anwendungsschicht erfolgt.

6. Verfahren nach einem der vorangehenden Ansprüche, **dadurch gekennzeichnet, dass** die Signatur des Datenpakets (D) mittels einer Hashfunktion ermittelt wird.

7. Verfahren nach einem der vorangehenden Ansprüche, **dadurch gekennzeichnet, dass** der erste Speicherbereich (FS_1) und der zweite Speicherbereich (FS_2) des Zwischenspeichers (FS) jeweils als Ringbuffer ausgeführt sind.

8. Verfahren nach einem der vorangehenden Ansprüche, **dadurch gekennzeichnet, dass** eine Zuordnung der in dem Zwischenspeicher (FS) abgespeicherten Metadaten (MD) zu den abgespeicherten Nutzdaten (UD) über eine eindeutige Segmentnummer (Sg) der jeweiligen Speicherbereiche erfolgt.

9. Verfahren nach einem der vorangehenden Ansprüche, **dadurch gekennzeichnet, dass** der Zwischenspeicher (FS) ein Abspeichern von Metadaten (MD) und Nutzdaten (UD) nur in Abhängigkeit von dem Ergebnis einer Überprüfung der verwendeten Transaktionsnummer ermöglicht.

10. Vorrichtung für die Durchführung einer Analyse eines Metadaten (MD) und Nutzdaten (UD) umfassenden Datenpakets (D) in einem Datenstrom, wobei das Datenpaket (D) Teil einer mindestens dieses eine Datenpaket (D) umfassenden Netzwerksitzung ist, wobei die Vorrichtung umfasst: mindestens ein Funktionsblock_(EM_F1) zum Bilden einer eindeutigen Signatur des Datenpakets; einen Zwischenspeicher (FS), der einen ersten Speicherbereich (FS_1) und einen zweiten Speicherbereich (FS_2) umfasst, wobei der Zwischenspeicher (FS) ein Abspeichern der Metadaten (MD) in dem ersten Speicherbereich (FS_1) und ein Abspeichern der Nutzdaten (UD) in dem zweiten Speicherbereich derart ermöglicht, dass eine Zuordnung der Nutzdaten (UD) zu den jeweiligen Metadaten (MD) erhalten bleibt, **dadurch gekennzeichnet, dass** eine für die Ausführung des jeweiligen Speichervorgangs verwendete Transaktionsnummer in Abhängigkeit von der Signatur des Datenpakets gebildet wird, und dass die Vorrichtung ferner umfasst: mindestens ein Funktionsmodul (EM_F2), das es ermöglicht, eine Suche in den Nutzdaten (UD) nach mindestens einem Suchbegriff vor oder nach dem Speichern des Datenpakets (D) in dem Zwischenspeicher (FS) durchzuführen und zumindest eine erfolgreiche Suche in den Metadaten (MD) durch Setzen einer Such-Kennung zu vermerken; und mindestens ein Sitzungs-Wiederherstellungsmodul (SFM), umfassend Mittel zum Lesen von Metadaten (MD) aus dem Zwischenspeicher (FS), einen Funktionsblock (SFM_F1), der geeignet ist zu prüfen, ob die gelesenen Metadaten aktuell bearbeitet werden; Mittel zum Abspeichern einer Kennung in die in dem Zwischenspeicher (FS) abgespeicherten Metadaten (MD) um anzuzeigen, dass die gelesenen Metadaten (MD) nun bearbeitet werden, und Mittel zum Lesen sämtlicher in dem Zwischenspeicher abgespeicherten Nutzdaten (UD) der jeweiligen Netzwerksitzung, falls in den Metadaten (MD) mindestens eines Datenpakets (D) dieser Netzwerksitzung eine Such-Kennung gesetzt ist und Mittel zur Rekonstruktion der der Nutzdaten (UD) in der ursprünglichen Reihenfolge.

11. Vorrichtung nach Anspruch 10, **dadurch gekennzeichnet, dass** die Vorrichtung Mittel zur Durchführung eines Verfahrens nach einem der Ansprüche 1 bis 9 aufweist.

12. Netzwerkknoten mit Computerprogramm, welches auf dem Netzwerknoten ablauffähig ist und zur Durchführung eines Verfahrens nach einem der Ansprüche 1 bis 9 programmiert ist.

## Claims

1. A method of analyzing a data packet (D) in a datastream, said data packet being comprised of metadata (MD) and useful data (DU), wherein the data packet (D) is extracted from the datastream ; the data packet (D) is assigned a unique signature; the data packet (D) is stored in a buffer store (FS), wherein the metadata (MD) are stored in a first memory area (FS-1) and the useful data (UD) in a second memory area (FS_2) such that an association between the useful data (UD) and the respective metadata (MD) is maintained; **characterized in that** a transaction number used for executing the respective storage operation is generated on the basis of the signature of the data packet (D); before or after the storage of the data packet (D) there is a search of the useful data (UD) for at least one search term, and at least one successful search is marked by setting a search-identifier in the metadata; the metadata (MD) is read from the buffer store (FS), and if a check shows that this data packet (D) is not now being processed, the associated useful data (UD) is read from the buffer store (FS) and an identifier is set in the metadata (MD) stored in the buffer store (FS), said identifier showing that this data packet (D) is now being processed; if all metadata (MD) and useful data (UD) from a network session have been read and the search for the search term was successful in at least one of the useful data (UD) items, the network session is reconstructed by putting the useful data (UD) in their original order.

2. A method according to Claim 1, **characterized in that** after the reading of the last data packet (D) in a network session, marked notation is placed in the metadata (MD) belonging to this network session which are saved in the buffer store (FS) to indicate that these metadata (MD) are being processed.

3. A method according to one of the Claims 1 or 2, **characterized in that** an analysis of the useful data (UD) of a reconstructed network session is carried out in order to identify at least one file-type of at least one file transmitted during the network session.

4. A method according to one of the previous claims, **characterized in that** the meta-information in the useful data (UD) of the network session is analyzed.

5. A method according to one of the previous claims, **characterized in that** an analysis of the useful data (UD) transmitted during the network session is done taking into account the network protocols of the application layer.

6. A method according to one of the previous claims, **characterized in that** the signature of the data packet (D) is determined by means of a hash function.

7. A method according to one of the previous claims, **characterized in that** the first memory area (FS_1) and the second memory area (FS_2) of the buffer store (FS) are each configured as a ring buffer.

8. A method according to one of the previous claims, **characterized in that** an assignment of the metadata (MD) stored in the buffer store (FS) to the stored useful data (UD) is done by means of a unique segment number (Sg) of the respective memory area.

9. A method according to one of the previous claims, **characterized in that** the buffer store (FS) only allows storage of metadata (MD) and useful data (UD) depending on the outcome of a validation of the transaction number used.

10. An apparatus for performing an analysis of a data packet (D) in a datastream, said data packet (D) being comprised of metadata (MD) and useful data (UD), wherein the data packet (D) is part of a network session comprising at least this one data packet (D), wherein the apparatus is comprised of: at least one function block (EM_F1) for creating a unique signature of the data packet (D); a buffer store (FS) that comprises a first memory area (FS_1) and a second memory area (FS_2), wherein the buffer store (FS) enables a storage of the metadata (MD) in the first memory area (FS_1) and a storage of the useful data (UD) in a second memory area in such a way that an association between the useful data (UD) and the respective metadata (MD) is maintained, **characterized in that** a transaction number used to carry out the respective storage process is formed subject to the signature of the data packet (D); and that the apparatus further comprises: at least one function module (EM_F2) that makes it possible to carry out a search of the useful data (UD) for at least one search term, before or after storage of the data packet (D) in the buffer store (FS) and to mark at least one successful search in the metadata (MD) by setting a search-identifier; and at least one session-reconstruction module (SFM), comprising a means of reading metadata (MD) from the buffer store (FS), a function block (SMF_F1) that is suitable for checking whether the metadata (MD) read is currently being processed; a means of setting an identifier in the metadata (MD) stored in the buffer store (FS) in order to indicate that the metadata (MD) read is now being processed, and a means of reading all useful data (UD) of the network session stored in the buffer store in case a search-identifier is set in at least one data packet (D) of this network session and a means of reconstructing the useful data (UD) in the original order.

11. An apparatus according to Claim 10, **characterized in that** the apparatus has a means for implementing a method according to one of the Claims 1 to 9.

12. Network node with a computer program that is executable at the network node and is programmed to implement a method according to one of the Claims 1 to 9.

## Revendications

1. Procédé d'analyse d'un paquet de données (D) comprenant des métadonnées (MD) et de des données utiles (DU) dans un flux de données, où le paquet de données (D) est extrait du flux de données, une signature univoque est associée au paquet de données (D) ; le paquet de données (D) est mis en mémoire dans une mémoire intermédiaire (FS), les métadonnées (MD) étant mises en mémoire dans une première zone de mémoire (FS_1) et les données utiles (UD) étant mises en mémoire dans une seconde zone de mémoire (FS_2) de manière à ce que subsiste une association des données utiles (UD) aux métadonnées (MD) respectives étant obtenue, **caractérisé en ce qu'**un numéro de transaction utilisé pour la mise en oeuvre du procédé de mémorisation respectif est formé en fonction de la signature du paquet de données (D) ; une recherche dans les données utiles (UD) en utilisant au moins un mot-clé est mise en oeuvre avant ou après la mémorisation du paquet de données (D) et au moins une recherche réussie est mentionnée dans les métadonnées (MD) grâce à la mise en place d'un identifiant de recherche ; les métadonnées (MD) sont lues à partir de la mémoire intermédiaire (FS) et si une vérification établit que ce paquet de données n'est pour l'heure pas traité, les données utiles (UD) associées sont lues à partir de la mémoire intermédiaire (FS) et un identifiant, qui indique que ce paquet de données (D) va dès lors être traité, est mis en place dans les métadonnées (MD) mises en mémoire dans la mémoire intermédiaire (FS) ; si toutes les métadonnées (MD) et les données utiles (UD) d'une session réseau ont été lues et la recherche en utilisant le mot-clé a été réussie dans au moins une des données utiles (UD), la session réseau est restaurée dans la mesure où les données utiles (UD) sont replacées dans leur ordre initial.

2. Procédé selon la revendication 1, **caractérisé en ce qu'**après la lecture du dernier paquet de données (D) d'une session réseau, il est mentionné, dans les métadonnées (MD) associées à cette session réseau et mises en mémoire dans la mémoire intermédiaire (FS), que ces métadonnées sont traitées.

3. Procédé selon l'une quelconque des revendications 1 ou 2, **caractérisé en ce qu'**une analyse des données utiles (UD) d'une session réseau restaurée est mise en oeuvre pour identifier au moins un type de fichier d'au moins un fichier transmis lors de la session réseau.

4. Procédé selon l'une quelconque des revendications précédentes, **caractérisé en ce que** des méta-informations sont évaluées dans les données utiles (UD) de la session réseau.

5. Procédé selon l'une quelconque des revendications précédentes, **caractérisé en ce qu'**une évaluation des données utiles (UD) transmises lors de la session réseau a lieu avec prise en compte de protocoles réseau de la couche d'application.

6. Procédé selon l'une quelconque des revendications précédentes, **caractérisé en ce que** la signature du paquet de données (D) est déterminée au moyen d'une fonction de hachage.

7. Procédé selon l'une quelconque des revendications précédentes, **caractérisé en ce que** la première zone de mémoire (FS_1) et la seconde zone de mémoire (FS_2) de la mémoire intermédiaire (FS) sont réalisés respectivement en tant que mémoire tampon circulaire.

8. Procédé selon l'une quelconque des revendications précédentes, **caractérisé en ce qu'**une association des métadonnées (MD), mises en mémoire dans la mémoire intermédiaire (FS), aux données utiles (UD) mises en mémoire a lieu par l'intermédiaire d'un numéro de segment (Sg) univoque des zones de mémoire respectives.

9. Procédé selon l'une quelconque des revendications précédentes, **caractérisé en ce que** la mémoire intermédiaire (FS) ne permet une mise en mémoire de métadonnées (MD) et de données utiles (UD) qu'en fonction du résultat d'une vérification du numéro de transaction utilisé.

10. Dispositif pour la mise en oeuvre d'une analyse d'un paquet de données (D) comprenant des métadonnées (MD) et des données utiles (UD) dans un flux de données, où le paquet de données (D) fait partie d'une session réseau comprenant au moins ledit paquet de données (D), où le dispositif comprend : au moins un bloc fonctionnel (EM_F1) pour former une signature univoque du paquet de données ; une mémoire intermédiaire (FS), qui comprend une première zone de mémoire (FS_1) et une seconde zone de mémoire (FS_2), la mémoire intermédiaire (FS) permettant une mise en mémoire des métadonnées (MD) dans la première zone de mémoire (FS_1) et une mise en mémoire des données utiles (UD) dans la seconde zone de mémoire de sorte qu'une association des données utiles (UD) aux métadonnées (MD) respectives, **caractérisé en ce qu'**un numéro de transaction utilisé pour la mise en oeuvre du procédé de mémorisation respectif est formé en fonction de la signature du paquet de données, et le dispositif comprend en outre : au moins un module fonctionnel (EM_F2) qui permet de mettre en oeuvre une recherche dans les données utiles (UD) en utilisant au moins un mot-clé avant ou après la mémorisation du paquet de données (D) dans la mémoire intermédiaire (FS) et de mentionner au moins une recherche réussie dans les métadonnées (MD) grâce à la mise en place d'un identifiant de recherche ; et au moins un module de restauration de session (SFM) comprenant un moyen de lecture des métadonnées (MD) à partir de la mémoire intermédiaire (FS), un bloc fonctionnel (SFM_F1) qui est approprié pour vérifier si les métadonnées lues sont pour l'heure traitées ; un moyen de mise en mémoire d'un identifiant dans les métadonnées (MD) mises en mémoire dans la mémoire intermédiaire (FS), pour indiquer que les métadonnées (MD) lues sont dès lors traitées, et un moyen pour lire l'ensemble des données utiles (UD), mises en mémoire dans la mémoire intermédiaire, de la session réseau respective, dans le cas où un identifiant de recherche est mis en place dans les métadonnées (MD) d'au moins un paquet de données (D) de cette session réseau et un moyen de restauration des données utiles (UD) dans leur ordre initial.

11. Dispositif selon la revendication 10, **caractérisé en ce que** le dispositif présente un moyen de mise en oeuvre d'un procédé selon l'une quelconque des revendications 1 à 9.

12. Noeud de réseau avec programme informatique, qui est susceptible de fonctionner sur le noeud de réseau et est programmé en vue d'une mise en oeuvre d'un procédé selon l'une quelconque des revendications 1 à 9.
